# FASCICULE DE BREVET EUROPEEN

(11) **EP 2 141 102 B1**
(45) Date de publication et mention de la délivrance du brevet: **08.08.2012**
(21) Numéro de dépôt: 09290489.5
(22) Date de dépôt: 25.06.2009
(51) Int. Cl.: B65H 29/12, B65H 29/58, H04N 1/00

(54) **Dispositif de traitement de feuilles en recto/verso pourvu de moyens évitant un bourrage lors du traitement du verso de ces feuilles**
Vorrichtung zur Bearbeitung von Blättern auf der Vorder- und Rückseite, die mit Mitteln zur Verhinderung eines Papierstaus beim Bearbeiten der Rückseite dieser Blätter ausgestattet ist
Device for treating sheets on both sides equipped with means for preventing jamming when treating the back of these sheets

(30) Priorité: 01.07.2008 FR 0803704
(43) Date de publication de la demande: 06.01.2010
(73) Titulaire: SAGEMCOM DOCUMENTS SAS, 92500 Rueil Malmaison (FR)
(72) Inventeur: Marcq, Frédéric, 92500 Rueil Malmaison (FR); Rolland, Patrick, 92500 Rueil Malmaison (FR)
(74) Mandataire: Beaudouin-Lafon, Emmanuel

(56) Documents cités:
- WO-A-2004/024455
- FR-A- 2 851 061
- JP-A- 2004 075 255
- US-A1- 2008 042 344
- US-A1- 2008 067 736

## Description

L'invention concerne un dispositif de traitement de feuilles en recto/verso, tel qu'un scanner capable de scanner successivement le recto et le verso des feuilles qu'il traite.

### ARRIERE PLAN DE L'INVENTION

Un tel appareil, qui est divulgué dans la demande de brevet EP2877331, est représenté sur les figures 1 à 3 en y étant repéré par 1. Il comporte un bac d'approvisionnement 2 dans lequel sont empilées des feuilles 3, 4 , 5 à traiter, et un chemin 7, dans lequel chaque feuille est engagée et déplacée pour traiter successivement son recto et son verso.

Ce chemin 7 a une forme générale de boucle, il comporte une première et une seconde extrémité 8 et 9 débouchant conjointement dans un canal d'éjection 10, ainsi qu'une entrée 11 de feuilles située entre ces extrémités 8 et 9 et orientée tangentiellement au chemin 7. Un canal d'approvisionnement 12 est également prévu pour transférer chaque feuille à traiter depuis le bac 2.

En fonctionnement, une feuille 3 est extraite du bac 2 et transférée vers l'entrée par deux rouleaux d'approvisionnement 13 et 14 situés au dessus du bac 2 et au niveau du canal 12. Elle est ensuite déplacée vers la première extrémité 8 du chemin 7 par un ensemble de rouleaux 15 à 18 équipant ce chemin 7.

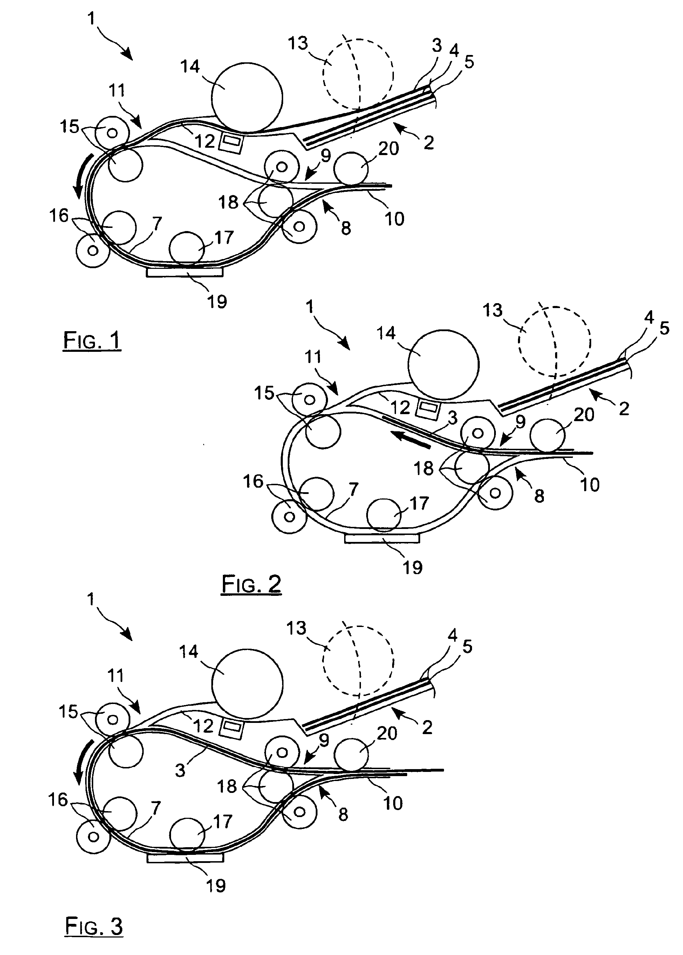

Durant ce déplacement, la feuille 3 passe devant un organe de traitement 19 qui scanne alors son recto, et elle sort par la première extrémité 8 du chemin 7, comme illustré en figure 1.

La feuille 3 est ensuite extraite du chemin 7, via la première extrémité 8, par un rouleau 20. Le rouleau 20 est ensuite commandé pour tourner en sens inverse afin d'introduire la feuille 3 dans le chemin 7, mais par sa seconde extrémité 9. Cette opération qui correspond à la figure 2 a pour effet de retourner cette feuille en vue de traiter son verso.

La feuille 3 est ensuite déplacée dans le chemin 7 vers la première extrémité 8, ce qui correspond à la situation de la figure 3. Durant cette opération, la feuille qui a été retournée présente son verso à l'organe de traitement 19, ce qui permet de scanner son verso.

Comme visible dans la figure 3, lorsque la longueur du chemin 7 est inférieure à celle de la feuille à traiter, les bords opposés de la feuille sont simultanément présents dans le canal d'éjection 10 lors du traitement de son verso. Dans cette situation, les bords de cette feuille se déplacent en sens inverse dans le canal d'éjection 10, ce qui constitue une source de bourrages et autres dysfonctionnements de l'appareil.

D'autre part le document US-A-2008/0067736 divulgue un dispositif de traitement de feuilles selon le préambule de la revendication 1, dans lequel les moyens d'extraction et d'introduction comportent une unité de guidage située entre d'une part la première et la seconde voie, et d'autre part la première et la seconde extrémité, laquelle unité de guidage comportant plusieurs organes mobiles pour aiguiller les feuilles.

### OBJET DE L'INVENTION

Le but de l'invention est de proposer une solution pour remédier aux inconvénients ci-dessus.

### RESUME DE L'INVENTION

A cet effet, l'invention a pour objet un dispositif de traitement de feuilles, comportant un chemin en forme de boucle dans lequel chaque feuille est déplacée pour être retournée afin de traiter successivement son recto et son verso, ce chemin comprenant une première extrémité et une seconde extrémité voisines, ainsi qu'une entrée de feuille située entre ces extrémités pour introduire dans ce chemin une feuille à traiter tout en la déplaçant vers la première extrémité, ainsi que des moyens d'extraction et d'introduction, pour extraire du chemin une feuille dépassant de la première extrémité et pour insérer cette feuille dans le chemin par sa seconde extrémité afin de la retourner, ces moyens d'extraction et d'introduction comportant une première voie et une seconde voie distinctes ainsi qu'un rouleau central et un premier rouleau appliqué sur ce rouleau central dans une région correspondant à la première voie, et un second rouleau appliqué sur le rouleau central dans une région correspondant à la seconde voie, et un organe d'aiguillage situé entre d'une part la première et la seconde voie, et d'autre part la première et la seconde extrémité, et dans lequel les moyens d'extraction et d'introduction comportent en outre un guide incluant une surface de guidage portée par l'organe d'aiguillage et longeant le rouleau central, pour qu'une feuille issue de la première voie s'engage entre cette surface de guidage et le rouleau central pour être transférée vers la seconde voie afin d'être retournée.

Avec cette solution, lorsque la feuille a une longueur supérieure à celle du chemin, ses bords opposés peuvent être orientés vers deux voies distinctes pour ne pas interférer l'un avec l'autre, ce qui contribue à réduire le risque de bourrage.

Complémentairement, la surface de guidage portée par l'organe d'aiguillage permet de retourner une feuille déjà traitée, en même temps qu'une nouvelle feuille est introduite et traitée dans le chemin.

L'invention concerne également un dispositif tel que défini ci-dessus, dans lequel l'organe d'aiguillage est agencé pour orienter chaque feuille provenant de la première extrémité du chemin, soit vers la première voie, soit vers la seconde voie, et pour orienter chaque feuille provenant de la seconde extrémité du chemin vers la seconde voie.

L'invention concerne également un dispositif tel que défini ci-dessus, dans lequel l'organe d'aiguillage a une forme de came mobile en rotation entre une première position et une seconde position.

### BREVE DESCRIPTION DES FIGURES

- la figure 1 déjà décrite est une vue schématique en coupe d'un dispositif connu traitant le recto d'une feuille ;
- la figure 2 déjà décrite est une vue schématique en coupe du dispositif de la figure 1 lors de la réintroduction d'une feuille en vue du traitement de son verso ;
- la figure 3 déjà décrite est une vue schématique en coupe du dispositif de la figure 1 lors du traitement du verso de la feuille réintroduite ;
- la figure 4 est une vue schématique en coupe du dispositif selon l'invention traitant le recto d'une feuille ;
- la figure 5 est une vue schématique en coupe agrandie montrant les moyens d'extraction et d'introduction ainsi que les extrémités du chemin de passage de la feuille dans le dispositif selon l'invention ;
- la figure 6 est une vue schématique en coupe du dispositif selon l'invention lors de la réintroduction d'une feuille en vue du traitement de son verso ;
- la figure 7 est une vue schématique en coupe du dispositif selon l'invention lors du traitement du verso de la feuille réintroduite ;
- la figure 8 est une vue schématique en coupe du dispositif selon l'invention lors du retournement de la feuille traitée avant empilement dans un bac de collecte ;
- la figure 9 est une vue schématique en coupe du dispositif selon l'invention durant l'empilement de la feuille traitée dans le bac de collecte.

### DESCRIPTION DETAILLEE DE L'INVENTION

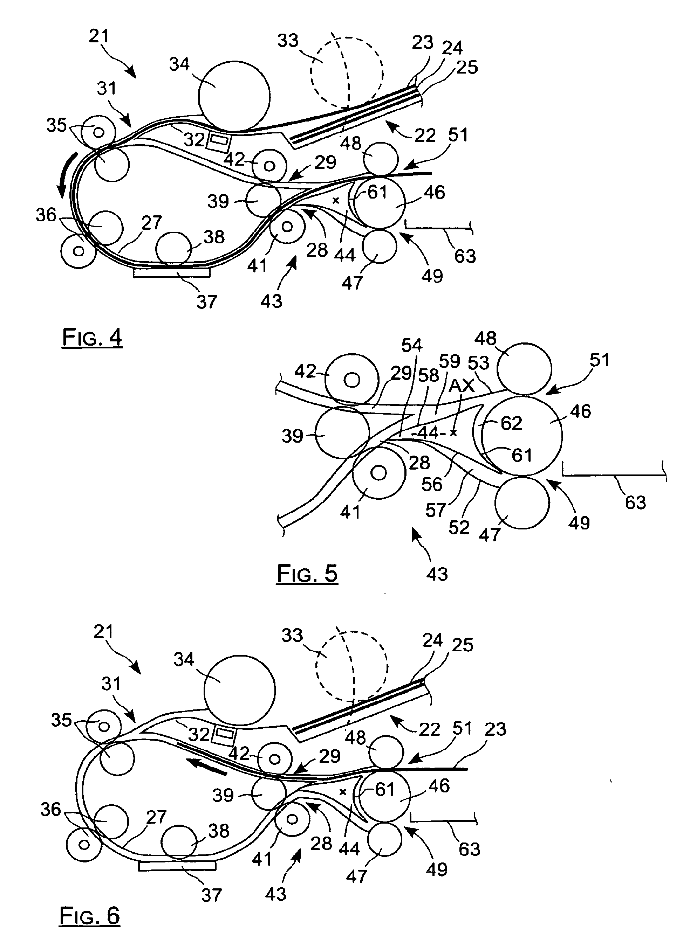

L'invention s'applique à tout appareil de traitement de feuilles en recto/verso, comme par exemple une imprimante ou bien un copieur. Dans l'exemple des figures, l'invention est appliquée à un scanner recto/verso repéré par 21. Comme visible en figure 4, ce scanner comporte un bac d'approvisionnement 22 dans lequel sont empilées des feuilles 23, 24, 25 à traiter, et un chemin 7 dans lequel chaque feuille est engagée et déplacée pour traiter successivement son recto et son verso.

Ce chemin 27 a une forme générale de boucle, il comporte une première extrémité 28, une seconde extrémité 29, ainsi qu'une entrée 31 de feuilles située entre ces extrémités 28 et 29 en étant orientée tangentiellement au chemin 27. La première et la seconde extrémités 28 et 29 sont orientées de façon convergente, en étant situées l'une au dessus de l'autre, de sorte qu'elles constituent respectivement l'extrémité inférieure et l'extrémité supérieure du chemin 27.

Les feuilles sont transférées depuis le bac 22 vers l'entrée 31 via un canal d'approvisionnement 32, au moyen de deux rouleaux 33 et 34 situés respectivement au dessus du bac 22 et au niveau du canal 32 pour déplacer chaque feuille à traiter depuis le bac 22, vers le chemin 27 en entraînant ces rouleaux en rotation.

Chaque feuille est déplacée dans le chemin 27 par un ensemble de rouleaux entraînés en rotation. Deux rouleaux constituant une première paire 35 sont montés de part et d'autre du chemin 27, et deux autres rouleaux constituant une seconde paire 36 espacée de la première, sont montés de part et d'autre du chemin 27.

La première paire 35 est située en aval de l'entrée 31, la seconde paire 36 étant située en aval de la première, par rapport au sens de circulation des feuilles dans le chemin 27. Un scanner proprement dit 37 est monté le long du chemin 27, en aval de la seconde paire de rouleaux 36, et un rouleau presseur 38 est prévu en vis-à-vis de ce scanner 37 pour appliquer la feuille à traiter contre celui-ci.

Additionnellement, un groupe de trois autres rouleaux est associé au chemin 27 en étant situé au niveau des extrémités 28 et 29 du chemin 27. Ce groupe comprend un rouleau central 39, un rouleau inférieur 41, et un rouleau supérieur 42 qui sont tous deux appliqués contre le rouleau central 39.

Le rouleau inférieur 41 est en appui sur le rouleau central 39 dans une région faisant partie de l'extrémité inférieure 28 du chemin 27, et le rouleau supérieur 42 est en appui sur le rouleau central 39 dans une région faisant partie de l'extrémité supérieure 29 du chemin 27.

Le dispositif comprend d'autre part des moyens 43 d'extraction et d'introduction d'une feuille dans le chemin 27, visibles de façon plus détaillée en figure 5, qui comportent un organe d'aiguillage 44, ainsi qu'une autre série de trois rouleaux.

La série de rouleaux inclut un rouleau central 46, un premier rouleau 47 et un second rouleau 48, dits respectivement rouleau inférieur et rouleau supérieur. Le rouleau inférieur 47 et le rouleau supérieur 48 étant l'un et l'autre appliqués contre le rouleau central 46.

Le rouleau inférieur 47 est en appui sur le rouleau central 46 pour définir une première voie 49 qui est une voie inférieure pour le passage d'une feuille issue du chemin 27. De manière analogue, le rouleau supérieur 48 est en appui sur le rouleau central 46, ce qui définit une seconde voie 51 qui est une voie supérieure de passage d'une feuille issue du chemin 27.

L'organe d'aiguillage 44 a une forme de came à contour courbe généralement triangulaire, mobile en rotation autour d'un axe qui est repéré par AX dans la figure 5, et qui est situé dans une région centrale de cette came.

L'organe 44 est situé horizontalement entre les extrémités 28 et 29 et les rouleaux 46, 47 et 48, et verticalement entre une paroi inférieure 52 et une paroi supérieure 53. Il comporte une extrémité ou doigt 54 située dans la région de l'extrémité inférieure 28.

La paroi inférieure 52 prolonge une paroi du contour externe du chemin 27, depuis l'extrémité inférieure 28 jusqu'au niveau du rouleau inférieur 47. De manière analogue, la paroi supérieure 53 prolonge une paroi du contour externe du chemin 27, depuis l'extrémité supérieure 29 jusqu'au rouleau supérieur 48.

La paroi inférieure 52 délimite conjointement avec une face inférieure 56 de l'organe 44 un chemin inférieur 57 par lequel l'extrémité inférieure 28 et la voie inférieure 49 sont reliées l'une à l'autre. De manière analogue, la paroi supérieure 53 délimite conjointement avec une face supérieure 58 de l'organe 44, un chemin supérieur 59 par lequel l'extrémité inférieure 28 et l'extrémité supérieure 29 sont reliées à la voie supérieure 51.

Lorsque l'organe mobile 44 occupe une première position, correspondant à celle des figures 4 et 5, son doigt 54 est abaissé pour être escamoté par rapport à l'extrémité inférieure 28. Dans ce cas le bord d'une feuille provenant de cette extrémité inférieure 28 est guidé d'abord par les parois délimitant cette extrémité 28, puis par la paroi supérieure 53 et la face supérieure 58 de l'organe 44. Ceci oriente cette feuille vers la voie supérieure 51, de manière à la faire passer entre le rouleau central 46 et le rouleau supérieur 48.

Lorsque l'organe 44 occupe une seconde position, correspondant à celle des figures 6 et suivantes, son doigt 54 est en position haute pour obstruer l'extrémité inférieure 28. Dans ce cas, le bord d'une feuille provenant de l'extrémité inférieure 28 est dévié par le doigt 54 pour longer sa face inférieure 56. Ceci oriente cette feuille vers la voie inférieure 49, de manière à la faire passer entre le rouleau central 46 et le rouleau inférieur 47.

Comme visible dans les figures, l'organe d'aiguillage 44 comporte également une surface de guidage 61, qui s'étend parallèlement au rouleau central 46 lorsque cet organe 44 occupe sa seconde position, pour délimiter conjointement avec celui-ci un chemin de retournement 62.

Grâce à cette surface 61 un bord de feuille provenant de la voie inférieure 49 est dévié par cette surface de guidage 61 pour être orienté dans le chemin de retournement 62, de manière à engager cette feuille dans la voie supérieure 51. Ceci permet notamment de retourner une feuille dont le recto et le verso ont été traités, avant de la déposer dans un bac de collecte repéré par 63.

En fonctionnement, le traitement d'une feuille 23 est assuré en activant d'abord les rouleaux 13 et 14 pour engager un premier bord cette feuille dans le chemin 27, via le canal 32 et l'entrée 31, tout en la déplaçant en direction de l'extrémité inférieure 28. L'organe d'aiguillage 44 a alors préalablement été placé dans sa première position.

Durant cette opération, la feuille 23 présente son recto au scanner 37 qui effectue alors l'acquisition d'une image correspondante. Simultanément, le premier bord de la feuille atteint l'extrémité inférieure 28, puis est orienté par l'organe d'aiguillage 44 dont le doigt 54 est alors abaissé, dans le chemin supérieur 59, pour engager cette feuille dans la voie supérieure 51, ce qui correspond à la situation de la figure 4.

Le rouleau 48 est alors commandé pour tourner dans le sens direct sur les figures de manière à extraire la feuille 23. Une fois que le second bord de cette feuille 23, c'est à dire le bord opposé à son premier bord, se trouve dans le chemin supérieur 59, l'organe d'aiguillage 44 est piloté pour passer dans sa seconde position.

Le rouleau 48 est ensuite piloté pour tourner dans le sens indirect sur les figures. Ceci a pour effet d'introduire la feuille 23 par son second bord dans l'extrémité supérieure 29. Cette opération qui a pour effet de retourner la feuille 23 correspond à la figure 6.

Les différents rouleaux 35, 36, 39, 41 et 42 équipant le chemin 27 sont alors activés pour déplacer à nouveau la feuille 23 dans le chemin 27, en direction de l'extrémité inférieure 28. La feuille 23 est ainsi déplacée le long du scanner 37 auquel elle présente cette fois-ci son verso pour qu'il en fasse l'acquisition.

Simultanément, le second bord de la feuille atteint l'extrémité inférieure 28. Il est ensuite dévié par l'organe 44 qui est alors dans sa seconde position, vers le chemin inférieur 57, de manière à engager cette feuille dans la voie inférieure 49.

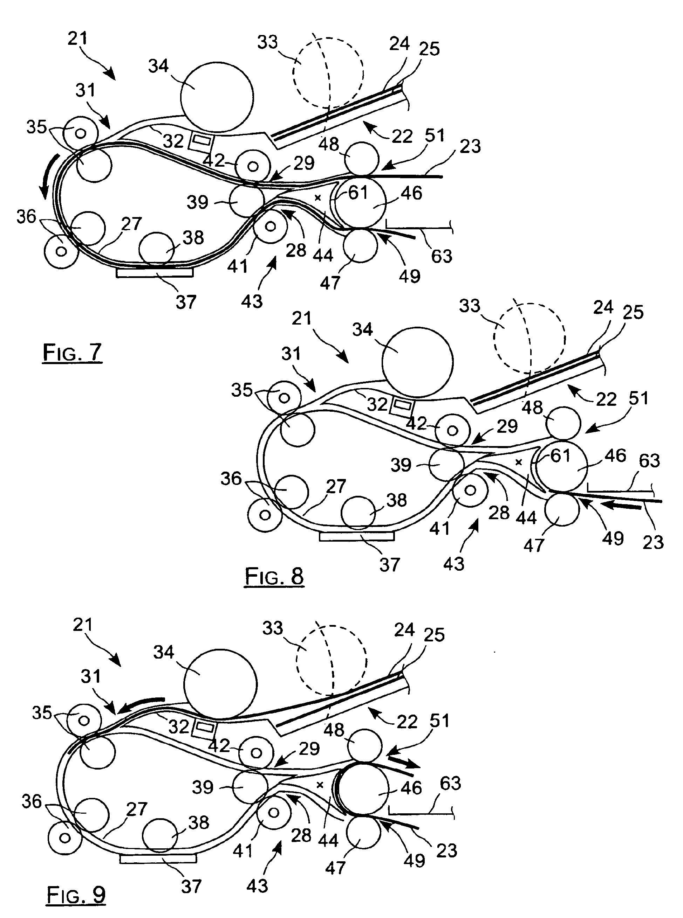

Dans cette situation qui correspond à la figure 7, l'extrémité de la feuille correspondant à son second bord est engagée dans la voie inférieure 28, alors que l'extrémité correspondant à son premier bord, est engagée dans la voie supérieure 51.

Ainsi, bien que la feuille 23 ait une longueur supérieure à la longueur du chemin 27, il n'existe pas de risque d'interférence entre son premier et son second bord, lors du traitement du verso de cette feuille puisque ces bords sont alors placés dans les voies 49 et 51 qui sont distinctes.

Une fois que la totalité du verso de la feuille 23 a été acquis par le scanner 37, cette feuille est extraite du chemin 27, via l'extrémité inférieure 28, par l'action du rouleau central 46 et du rouleau inférieur 47. Après extraction, les rouleaux 46, 47 et 48 sont commandés pour tourner en sens inverse, le rouleau central 46 tournant alors dans le sens indirect sur les figures.

Le premier bord de la feuille 23 est alors dévié par la surface de guidage 61 lorsqu'il la rencontre, de façon à orienter ce bord dans le chemin de retournement 62 pour engager la feuille dans la voie supérieure 51, ce qui correspond à la situation de la figure 8.

Comme visible dans la figure 9, la feuille 23 est ensuite entraînée par le rouleau central 46 jusqu'à être complètement extraite des moyens 43, ce qui a pour effet de la déposer dans le bac de collecte 63.

L'opération de retournement qui est illustrée sur les figures 8 et 9 permet de replacer les feuilles dans le bac de collecte 63 selon un ordre et une orientation recto/verso identiques à l'ordre et l'orientation dans lesquels ces feuilles avaient été placées dans le chargeur 22.

D'autre part, comme visible dans la figure 9, cette opération monopolise uniquement les moyens d'extraction et d'introduction 43, de sorte qu'une autre feuille telle que la feuille 24 peut simultanément être engagée dans le chemin 27, via l'entrée 31.

## Revendications

1. Dispositif (21) de traitement de feuilles, comportant un chemin (27) en forme de boucle dans lequel chaque feuille (23) est déplacée pour être retournée afin de traiter successivement son recto et son verso, ce chemin (27) comprenant une première extrémité (28) et une seconde extrémité (29) voisines, ainsi qu'une entrée de feuille (31) située entre ces extrémités (28, 29) pour introduire dans ce chemin (27) une feuille (23) à traiter tout en la déplaçant vers la première extrémité (28), ainsi que des moyens d'extraction et d'introduction, pour extraire du chemin (27) une feuille (23) dépassant de la première extrémité (28) et pour insérer cette feuille dans le chemin (27) par sa seconde extrémité (29) afin de la retourner, ces moyens (43) d'extraction et d'introduction comportant une première voie (49) et une seconde voie (51) distinctes ainsi qu'un rouleau central (46) et un premier rouleau (47) appliqué sur ce rouleau central (46) dans une région correspondant à la première voie (49), et un second rouleau (48) appliqué sur le rouleau central (46) dans une région correspondant à la seconde voie (51), **caractérisé en ce que** les moyens (43) d'extraction et d'introduction comportent en outre un organe d'aiguillage (44) situé entre d'une part la première et la seconde voie (49, 51), et d'autre part la première et la seconde extrémité (28, 29), et un guide incluant une surface de guidage (61) portée par l'organe d'aiguillage (44) et longeant le rouleau central (46), pour qu'une feuille (23) issue de la première voie (49) s'engage entre cette surface de guidage (61) et le rouleau central (46) pour être transférée vers la seconde voie (51) afin d'être retournée.

2. Dispositif selon la revendication 1, dans lequel l'organe d'aiguillage (44) est agencé pour orienter chaque feuille (23) provenant de la première extrémité (28) du chemin (27), soit vers la première voie (49), soit vers la seconde voie (51), et pour orienter chaque feuille (23) provenant de la seconde extrémité (29) du chemin (27) vers la seconde voie (51).

3. Dispositif selon la revendication 1 ou 2, dans lequel l'organe d'aiguillage (44) a une forme de came mobile en rotation entre une première position et une seconde position.

## Claims

1. A sheet-processor device (21) including a path (27) in the form of a loop in which each sheet (23) is moved in order to be turned over so as to process its recto and verso faces in succession, the path (27) having neighboring first and second ends (28, 29) and a sheet inlet (31) situated between these ends (28, 29) in order to insert a sheet (23) for processing into the path (27) while moving it towards the first end (28), and extraction and insertion means for extracting from the path (27) a sheet (23) projecting beyond the first end (28) and for inserting said sheet into the path (27) via its second end (29) in order to turn it over, the extraction and insertion means (43) having a first channel (49) and a second channel (51) that are distinct, together with a central roller (46) and a first roller (47) pressed against the central roller (46) in a region corresponding to the first channel (49), and a second roller (48) pressed against the central roller (46) in a region corresponding to the second channel (51), the device being **characterized in that** the extraction and insertion means (43) further include a switching member (44) situated between firstly the first and second channels (49, 51) and secondly the first and second ends (28, 29), and a guide having a guide surface (61) carried by the switching member (44) and running along the central roller (46) so that a sheet (23) coming from the first channel (49) engages between said guide surface (61) and the central roller (46) to be transferred towards the second channel (51) in order to be turned over.

2. A device according to claim 1, wherein the switching member (44) is arranged to direct each sheet (23) coming from the first end (28) of the path (27) either towards the first channel (49) or towards the second channel (51), and to direct each sheet (23) coming from the second end (29) of the path (27) towards the second channel (51).

3. A device according to claim 1 or claim 2, wherein the switching member (44) is in the form of a cam that is movable in rotation between a first position and a second position.

## Patentansprüche

1. Vorrichtung (21) zum Behandeln von Blättern, umfassend einen schleifenförmigen Pfad (27), in dem jedes Blatt (23) bewegt wird, um umgedreht zu werden, damit es sukzessiv beidseitig behandelt wird, wobei dieser Pfad (27) ein erstes Ende (28) und ein benachbartes zweites Ende (29) umfasst sowie einen Blatteingang (31), der sich zwischen diesen Enden (28, 29) befindet, um in diesen Pfad (27) ein Blatt (23) einzuführen, das vollständig behandelt wird, während es in Richtung des ersten Endes (28) bewegt wird, sowie Mittel zum Herausziehen und Einführen, um aus dem Pfad (27) ein Blatt (23) herauszuziehen, das aus dem ersten Ende (28) herausragt, und um dieses Blatt mit seinem zweiten Ende (29) in den Pfad (27) einzuführen, damit es gewendet wird, wobei diese Mittel (43) zum Herausziehen und Einführen einen unterschiedlichen ersten Weg (49) und zweiten Weg (51) umfassen sowie eine zentrale Rolle (46) und eine erste Rolle (47), die auf dieser zentralen Rolle (46) in einem Bereich angebracht sind, der dem ersten Weg (49) entspricht, und eine zweite Rolle (48), die auf der zentralen Rolle (46) in einem Bereich angebracht ist, die dem zweiten Weg (51) entspricht, **dadurch gekennzeichnet, dass** die Mittel (43) zum Herausziehen und Einführen des Weiteren ein Weichenorgan (44) umfassen, das sich einerseits zwischen dem ersten und zweiten Weg (49, 51) und andererseits zwischen dem ersten und zweiten Ende (28, 29)befindet, und eine Führung mit einer Führungsoberfläche (61), die vom Weichenorgan (44) getragen wird und sich entlang der zentralen Rolle (46) erstreckt, damit ein aus dem ersten Weg (49) ausgegebenes Blatt (23) zwischen dieser Führungsoberfläche (61) und der zentralen Rolle (46) erfasst wird, um in Richtung des zweiten Wegs (51) weitergeleitet zu werden, damit es gewendet wird.

2. Vorrichtung nach Anspruch 1, bei der das Weichenorgan (44) so ausgebildet ist, dass jedes Blatt (23), das aus dem ersten Ende (28) des Pfads (27) herauskommt, entweder in Richtung des ersten Wegs (49) oder in Richtung des zweiten Wegs (51) gelenkt wird, und jedes Blatt (23), das aus dem zweiten Ende (29) des Pfads (27) herauskommt, in Richtung des zweiten Wegs (51) gelenkt wird.

3. Vorrichtung nach Anspruch 1 oder 2, bei der das Weichenorgan (44) eine Form einer Socke hat, die rotationsbeweglich zwischen einer ersten Position und einer zweiten Position ist.
